# EUROPEAN PATENT APPLICATION

(11) **EP 3 995 514 A1**
(43) Date of publication of application: **11.05.2022**
(21) Application number: 20834626.2
(22) Date of filing: 26.06.2020
(51) Int. Cl.: C08B 15/04, C08F 251/02, C08F 2/44

(54) **COMPOSITE PARTICLE AND METHOD FOR PRODUCING COMPOSITE PARTICLE**

(30) Priority: 01.07.2019 JP 2019122831
(71) Applicant: TOPPAN INC., Tokyo 110-0016 (JP); The University of Tokyo, Bunkyo-ku, Tokyo 113-8654 (JP)
(72) Inventor: NISHIJIMA, Nao, Tokyo 110-0016 (JP); FUJISAWA, Shuji, Tokyo 113-8654 (JP)
(74) Representative: TBK
(86) International application number: PCT/JP2020/025219
(87) International publication number: WO 2021/002290

(57) **Abstract**

A composite particle comprising: a core particle containing at least one type of polymer; and micronized cellulose that has an anionic functional group, is inseparably bonded to the core particle, and is disposed on a surface of the core particle, wherein an organic onium cation or an ammonium ion is bonded to at least a part of the micronized cellulose.

## Description

### TECHNICAL FIELD

The present invention relates to composite particles composed of micronized cellulose and a core particle.

Priority is claimed on Japanese Patent Application No. 2019-122831, filed July 1, 2019, the content of which is incorporated herein by reference.

### BACKGROUND ART

In recent years, attempts have been actively made to micronize cellulose fibers in wood to an extent such that at least one side of the structure thereof is on the order of nanometer, and utilize the cellulose fibers as a novel functional material.

For example, Patent Literature 1 discloses that micronized cellulose fibers, that is, cellulose nanofibers (hereinafter, also referred to as "CNF") are obtained by repeating a mechanical treatment on wood cellulose with a blender or a grinder. CNFs obtained by this method are described to have a minor axis diameter of 10 to 50 nm and a major axis diameter of 1 µm to 10 mm. This CNF has a lightness of 1/5 of steel, a strength of 5 times or more, and an enormous specific surface area of 250 m²/g or more, and thus is expected to be used as a filler for resin reinforcement and an adsorbent.

In the production of the CNF, attempts have been actively made to chemically treat cellulose fibers in wood in advance so that the fibers can be easily micronized, and then micronize the fibers by a low-energy mechanical treatment such as a household mixer. The method of the chemical treatment is not particularly limited, but a method in which an ionic functional group is introduced into the cellulose fibers to facilitate the micronization is preferable. When the ionic functional group is introduced into the cellulose fibers, a solvent easily infiltrates between cellulose microfibril structures due to osmotic pressure effect, making it possible to greatly reduce the energy required for micronizing a cellulose raw material.

The method for introducing the ionic functional group is not particularly limited, but for example, Non Patent Literature 1 discloses a method in which the fine fiber surface of cellulose is selectively subjected to a phosphoric acid esterification treatment using a phosphoric acid esterification treatment. Patent Literature 2 discloses that cellulose is carboxymethylated by reacting the cellulose with monochloroacetate or sodium monochloroacetate in a high-concentration aqueous alkali solution. A carboxy group may be introduced by directly reacting a gasified carboxylic anhydride-based compound of maleic acid, phthalic acid, or the like with cellulose in an autoclave.

In addition, a method of selectively oxidizing the fine fiber surface of cellulose using 2,2,6,6-tetramethylpiperidinyl-1-oxy radical (TEMPO), which is a relatively stable N-oxyl compound, as a catalyst has also been reported (see, for example, Patent Literature 3). The oxidation reaction (TEMPO oxidation reaction) using TEMPO as a catalyst enables an environmentally friendly chemical modification that proceeds in an aqueous system, normal temperature, and normal pressure. When the TEMPO oxidation is applied to cellulose in wood, the reaction does not proceed inside the crystal, and only the alcoholic primary carbon of the cellulose molecular chain on the crystal surface can be selectively converted into a carboxy group.

Due to osmotic pressure effect caused by ionization between carboxy groups which have been selectively introduced into the crystal surface through TEMPO oxidation, cellulose single nanofibers (hereinafter, also referred to as CSNF) dispersed in individual cellulose microfibril units in a solvent are obtained. The CSNF exhibits high dispersion stability derived from a carboxy group on the surface thereof. It has been reported that wood-derived CSNF obtained from wood by a TEMPO oxidation reaction is a structure having a high aspect ratio with a minor axis diameter of around 3 nm and a major axis diameter of several tens of nm to several µm, and an aqueous dispersion liquid and formed body thereof have high transparency.

Patent Literature 4 discloses that a laminated film obtained by coating and drying a CSNF dispersion liquid has gas barrier properties.

Patent Literature 5 discloses that a dispersion liquid containing micronized cellulose highly dispersed in an organic solvent is obtained by surface modification in which an organic onium cation is disposed as a counter ion of cationic micronized cellulose.

For example, Patent Literature 6 describes, as an example of a coating composition using micronized cellulose, an aqueous coating liquid containing TEMPO-oxidized CNFs. Patent Literature 6 discloses that this aqueous coating liquid has good coatability, and a laminate having barrier properties can be obtained by coating an anchor layer with the aqueous coating liquid.

7 discloses a coating liquid containing TEMPO-oxidized CNFs in which carbon fine particles are stabilized and dispersed by the influence of entanglement between fibers having a high aspect ratio of cellulose nanofibers, thickening characteristics, and charges derived from a carboxy group.

Meanwhile, for practical use of CNFs, it is a problem that the solid concentration of the resulting CNF dispersion liquid is as low as about 0.1 to 5%. For example, when a micronized cellulose dispersion liquid is to be transported, the micronized cellulose dispersion liquid is transported together with a large amount of solvent, and thus transportation cost is increased, which greatly affects the business. In addition, also when the CNF dispersion liquid is used as an additive for resin reinforcement, there are problems that the addition efficiency is poor due to low solid concentration, and when water serving as a solvent is not compatible with the resin, it is difficult to combine them. Furthermore, in the case of distribution in a water-containing state, there is also a risk of spoilage, and therefore measures such as refrigerated storage and preservation treatment are required, which cause an increase in cost.

However, when the solvent of the micronized cellulose dispersion liquid is simply removed by thermal drying or the like, the micronized cellulose is aggregated and cornified, or formed into a film, and the expected function may not be stably expressed when used as an additive. Furthermore, since the solid concentration of the CNFs is low, a large amount of energy is required in the step of removing the solvent through drying, which is also a hurdle to the business.

As described above, handling CNFs in the form of a dispersion liquid itself is a problem for the business, and it has been strongly desired to provide a new aspect in which CNFs can be easily handled.

As a new aspect in which CNFs can be easily handled, Patent Literature 8 describes composite particles including a coating layer composed of cellulose fibers and a polymer covered with the coating layer. In this composite particles, since the cellulose fibers and the polymer are integrated, they can be easily separated by filtration, and can be distributed as a powder. The redispersibility of the powder is also good.

### [Citation List]

### [Patent Literature]

[Patent Literature 1]
   Japanese Unexamined Patent Application, First Publication No. 2010-216021
[Patent Literature 2]
   PCT International Publication No. WO2014/088072
[Patent Literature 3]
   Japanese Unexamined Patent Application, First Publication No. 2008-001728
[Patent Literature 4]
   International Patent Publication, First Publication No. 2013/042654
[Patent Literature 5]
   Japanese Unexamined Patent Application, First Publication No. 2015-101694
[Patent Literature 6]
   Japanese Patent No. 5928339
[Patent Literature 7]
   Japanese Patent No. 6020454
[Patent Literature 8]
   Japanese Unexamined Patent Application, First Publication No. 2019-38949

### [Non Patent Literature]

[Non Patent Literature 1] Noguchi Y, Homma 1, Matsubara Y. Complete nanofibrillation of cellulose prepared by phosphorylation. Cellulose. 2017; 24: 1295.10.1007/s10570-017-1191-3

### DISCLOSURE OF INVENTION

### PROBLEMS TO BE SOLVED BY THE INVENTION

Although the composite particles described in Patent Literature 8 are excellent as a material exhibiting the characteristics of the CNF as described above, there is room for improvement in that there is a limit to the types of polymers that can be applied.

When composite particles are formed of a resin material that cannot be applied, there are various problems such as a significant decrease in yield, a large variation in particle size distribution of particles to be obtained, and insufficient CNF characteristics as a material due to a small amount of CNF present on the surface of the particles.

In view of the above circumstances, an object of the present invention is to provide composite particles of cellulose fibers having excellent handleability and high versatility, and a method for producing the composite particles.

### [Solution to Problem]

A first aspect of the present invention is a composite particle including: a core particle containing at least one type of polymer; and micronized cellulose that has an anionic functional group, is inseparably bonded to the core particle, and is disposed on a surface of the core particle.

In this composite particle, an organic onium cation or an amine is bonded to at least a part of the micronized cellulose.

A second aspect of the present invention is a method for producing the composite particle.

This production method includes: a first step of defibrating an anionic cellulose raw material in a solvent containing an organic onium compound or an amine to obtain a micronized cellulose dispersion liquid containing micronized cellulose to which an organic onium cation or an amine is bonded; a second step of stabilizing a core particle precursor in a liquid state, as an emulsion, in the micronized cellulose dispersion liquid; and a third step of solidifying the core particle precursor to form a core particle, thus obtaining a composite particle in which the core particle is coated with the micronized cellulose inseparably bonded to the core particle.

### EFFECTS OF THE INVENTION

According to the present invention, it is possible to provide cellulose fiber composite particles having excellent handleability and high versatility.

### BRIEF DESCRIPTION OF THE DRAWINGS

Fig. 1 is a schematic view of a composite particle according to an embodiment of the present invention.
Fig. 2 is a view showing a process in a method for producing the composite particle.
Fig. 3 is a view showing a process in a method for producing the composite particle.
Fig. 4 is a graph showing the FT-IR measurement results in a micronized cellulose dispersion liquid according to the composite particle of Examples.
Fig. 5 is a scanning electron microscope image of composite particles according to Examples.
Fig. 6 is a scanning electron microscope image of composite particles according to Examples.
Fig. 7 is a scanning electron microscope image of composite particles according to Comparative Examples.
Fig. 8 is a scanning electron microscope image of composite particles according to Comparative Examples.
Fig. 9 is a graph showing a particle size distribution of composite particles according to Examples.

### BEST MODE FOR CARRYING OUT THE INVENTION

Hereinafter, an embodiment of the present invention will be described with reference to the drawings. However, in the drawings described below, portions corresponding to each other are denoted by the same reference numerals, and description of overlapping portions will be omitted as appropriate. In addition, the present embodiment exemplifies a configuration for embodying the technical idea of the present invention, and does not specify the material, shape, structure, arrangement, dimension, and the like of each part as follows. Various modifications can be made to the technical idea of the present invention within the technical scope defined by the claims described in the claims.

### <Composite particle 5>

First, a composite particle 5 composed of micronized cellulose/core particle according to a first embodiment of the present invention will be described. One aspect of a core particle 3 is a resin, and is also referred to as a polymer.

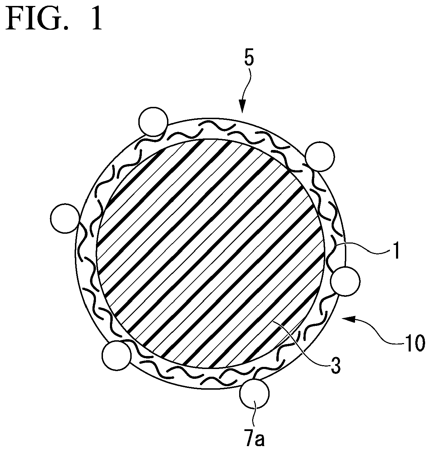

Fig. 1 is a schematic view showing the composite particle 5. The composite particle 5 includes the core particle 3 and micronized cellulose 1 located on the surface of the core particle 3. In the composite particle 5, the micronized cellulose 1 forms a micronized cellulose layer 10, and is bonded to the core particle 3 in an inseparable state.

An organic onium cation or an amine 7a is bonded as a counter cation to at least a part of the micronized cellulose 1. The ionized state of an organic onium compound is referred to as an organic onium ion or an organic onium cation. In addition, the amine used herein is an amine in which a part or all thereof has been ionized and contains ammonium ions. Hereinafter, the organic onium compound or the amine is also referred to as "organic onium compound/amine", and the organic onium cation or the ammonium ion is also referred to as "organic onium cation (or organic onium ion)/ammonium ion".

The composite particles 5 are obtained by solidifying an O/W type Pickering emulsion using the micronized cellulose 1 and a core particle precursor 2 in a liquid state (hereinafter, also simply referred to as "droplet") of oil droplets (oil phase, oil particles, dispersed phase) of an emulsion.

Solidification of the core particle precursor 2 can be performed by various methods. Examples thereof include a polymerization granulation method (for example, emulsion polymerization method, suspension polymerization method, seed polymerization method, and radiation polymerization method) in which particles are formed in a polymerization process using a monomer having a polymerizable functional group (hereinafter, also referred to as "polymerizable monomer") as the core particle precursor 2, and a dispersion granulation method (for example, spray drying method, in-liquid curing method, solvent evaporation method, phase separation method, and solvent dispersion cooling method) in which particles are formed from a polymer solution in the form of microdroplets.

In the present embodiment, the "solidification of the core particle precursor" is a concept including all of (1) polymerizing polymerizable monomer droplets, (2) solidifying polymer droplets, and (3) solidifying polymerizable monomer droplets and polymer droplets.

Adsorption of the micronized cellulose 1 to the interface of the core particle precursor 2 dispersed in a hydrophilic solvent of a continuous phase stabilizes the O/W type Pickering emulsion. By solidifying the core particle precursor 2 inside the emulsion while maintaining the stabilized state, the composite particles 5 using the emulsion as a template can be prepared. Here, the "stabilized state of the emulsion" means a state where the droplet size of the emulsion does not change even when the emulsion is left to stand for a long time (for example, 12 hours). When the emulsion is unstable, some droplets coalesce with each other over time, so that the particle size distribution of the droplets changes to be larger than that in the initial stage, the particle size distribution varies, or the oil phase and the aqueous phase are separated in some cases. As a result, the obtained composite particles become non-uniform.

The mechanism in which the micronized cellulose 1 is adsorbed to the interface of the droplets to stabilize the O/W type Pickering emulsion is considered to be related to the action due to the decrease in the interfacial energy caused by the adsorption. The micronized cellulose 1, which is a solid particle that has been micronized to the submicron order, is adsorbed to the interface of the droplets by physical force, to form a barrier of cellulose against the aqueous phase. Once the micronized cellulose 1 is adsorbed to form the interface, the emulsion structure is stabilized because greater energy is required for desorption.

Furthermore, it is also presumed that the micronized cellulose 1 is amphiphilic, and a hydrophobic side of the micronized cellulose 1 is adsorbed to hydrophobic droplets, and hydrophilicity is directed to a hydrophilic dispersion solvent side of the micronized cellulose 1, thereby improving the stabilization of the droplet interface. The adsorption force at the interface depends on high affinity of the solid particles for the oil phase and the aqueous phase. That is, the adsorption force depends on both the affinity of the micronized cellulose 1 for the core particle precursor and the affinity of the micronized cellulose 1 for the dispersion solvent.

In the present embodiment, by imparting hydrophobicity to a part of the micronized cellulose 1, the affinity of the micronized cellulose 1 for the droplets is increased, and thus the adsorption force is improved. As a method for imparting hydrophobicity, a method of using the organic onium compound/amine 7 for the micronized cellulose 1 having an anionic functional group, thereby introducing an organic onium ion/ammonium ion 7a serving as a counter ion is preferable from the viewpoint that the effect of imparting hydrophobicity is high and it is advantageous in process cost.

By preparing the composite particles 5 using the partially hydrophobized micronized cellulose 1, the stability of the emulsion is improved. As a result, the number of types of applicable materials of the core particle precursor greatly increases, and various composite particles 5 that can meet required specifications according to applications and the like can be prepared.

In the present embodiment, the term "inseparable" indicating the bonding state between the core particle 3 and the micronized cellulose 1 means that the micronized cellulose 1 and the core particle 3 are not separated, and the coating state of the core particle 3 coated with the micronized cellulose 1 is maintained even after repeating an operation of purifying and washing the composite particles 5 by centrifuging a dispersion liquid containing the composite particles 5 to remove the supernatant, further adding a solvent, and redispersing the composite particles 5, or an operation of repeatedly washing the composite particles 5 with a solvent by filtration washing using a membrane filter.

The coating state of the core particle 3 coated with the micronized cellulose 1 can be confirmed by surface observation of the composite particles 5 with a scanning electron microscope (SEM). The detailed mechanism in which the micronized cellulose 1 and the core particle 3 are inseparably bonded to each other has not been clarified. However, it is considered that since the composite particles 5 are prepared using an O/W type emulsion stabilized by the micronized cellulose 1 as a template, when solidification of droplets proceeds with the micronized cellulose 1 in contact with the droplets inside the emulsion, a part of the micronized cellulose 1 is immobilized while being located in the droplets, and finally, the core particle 3 and the micronized cellulose 1 are inseparably bonded to each other.

The O/W type emulsion is also called an oil-in-water type emulsion, and has water as a continuous phase and oil dispersed therein as oil droplets (oil particles).

One feature of the composite particles 5 is that the composite particles 5 have a shape close to a sphere derived from the O/W type emulsion because the composite particles 5 are prepared using the O/W type emulsion stabilized by the micronized cellulose 1 as a template. In the typical composite particles 5, the micronized cellulose layer 10 made of the micronized cellulose 1 is formed with a relatively uniform thickness on the surface of the spherical core particle 3.

The average thickness of the micronized cellulose layer 10 is obtained by cutting, with a microtome, a resin lump obtained by embedding composite particles 5 with an embedding resin, then performing SEM observation, randomly measuring the thicknesses of the micronized cellulose layers 10 in the cross-sectional image of the composite particles 5 in the image at 100 locations on the image, and calculating the arithmetic average value.

One of the characteristics of the composite particles 5 is that the thickness of the micronized cellulose layer 10 is uniform. The coefficient of variation of the thickness value of the micronized cellulose layer 10 (standard deviation of 30 locations randomly extracted from 100 locations described above) is preferably 0.5 or less, and more preferably 0.4 or less.

The micronized cellulose 1 in the present embodiment is not particularly limited, but preferably has an anionic functional group on the crystal surface thereof, and the content of the anionic functional group is 0.1 mmol or more and 5.0 mmol or less per 1 g of cellulose.

Further, the micronized cellulose 1 preferably has a fiber shape derived from a microfibril structure. Specifically, it is preferable that the micronized cellulose 1 is fibrous, and has a number average minor axis diameter of 1 nm or more and 1,000 nm or less, and a number average major axis diameter of 50 nm or more, and the number average major axis diameter is 5 times or more the number average minor axis diameter. The crystal structure of micronized cellulose 1 is preferably a cellulose I type.

### <Method for producing composite particles 5>

A method for producing the composite particles 5 of the present embodiment will be described. The method for producing the composite particles according to the present embodiment includes the steps of: defibrating an anionic cellulose raw material 6 in a solvent containing the organic onium compound/amine 7 to obtain a micronized cellulose dispersion liquid (first step); stabilizing the core particle precursor 2 in a liquid state, as an emulsion, in the micronized cellulose dispersion liquid (second step); and solidifying the core particle precursor 2 to obtain composite particles coated with the micronized cellulose 1 (third step).

The composite particles 5 obtained by the above production method is obtained as a dispersion body. When the solvent is removed from the dispersion body, a dry solid of the composite particles 5 having good handleability is obtained. The method for removing the solvent is not particularly limited, and examples thereof include a method of removing the solvent by a centrifugation method or a filtration method, and a method of removing the solvent by vaporizing the solvent in an oven or the like. At this time, the obtained dry solid of the composite particles 5 is not in the form of a film or an aggregate, and is a fine powder. Although the reason for this is not clear, in the case of a dispersion liquid containing the composite particles 5, the composite particles 5 are substantially spherical composite particles containing the micronized cellulose 1 immobilized on the surface, and therefore even if the solvent is removed, the micronized cellulose 1 is not aggregated, and only point contact occurs between adjacent composite particles. Since the composite particles 5 do not cause aggregation, it is easy to redisperse the composite particles 5 obtained as a dry powder in a solvent, and the dispersion stability derived from the micronized cellulose 1 bonded to the surface is exhibited even after the redispersion.

The dry powder of the composite particles 5 contains almost no solvent, and is a dry solid characterized by being redispersible in the solvent. Specifically, the solid content thereof can be 80% or more, further 90% or more, and further 95% or more.

Since it is easy to substantially remove the solvent from the dispersion body of the composite particles 5, preferable effects are obtained from the viewpoint of reduction in transportation cost, prevention of spoilage, improvement in addition ratio, and improvement in kneading efficiency with the resin. Even when the solid content is 80% or more by a dry treatment, the micronized cellulose 1 is likely to absorb moisture, so that the solid content is decreased over time due to adsorption of the micronized cellulose 1 to moisture in the air, and the solid content may be 80% or less during storage. However, in consideration of the technical idea of the present invention in which the composite particles 5 are easily obtained as a dry powder and can be further redispersed, it should be said that a dry solid obtained through the step of setting the solid content of the dry powder containing the composite particles 5 to 80% or more is included in the technical scope of the present invention.

Hereinafter, each step of the production method will be described in detail.

### (First step)

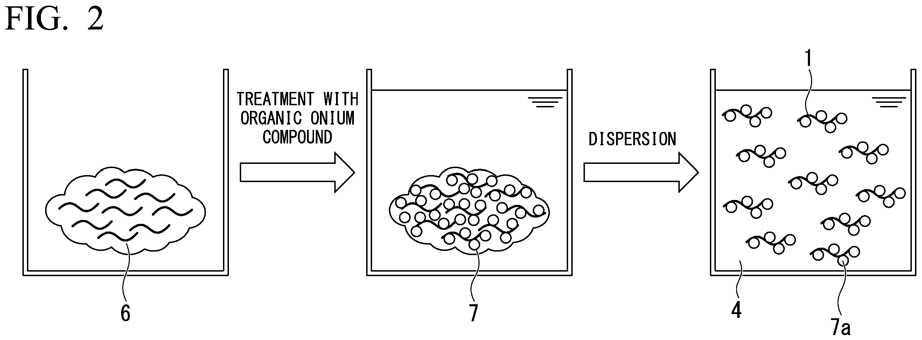

Fig. 2 shows a first step in the present embodiment.

The first step is a step of defibrating the anionic cellulose raw material 6 in a solvent containing the organic onium compound/amine 7 to obtain a micronized cellulose dispersion liquid.

First, as shown in Fig. 2, various types of anionic cellulose raw materials 6 and the organic onium compound/amine 7 are mixed. As a result, the organic onium cation/ammonium ion 7a contained in the organic onium compound/amine 7 is bonded to the cellulose raw material 6, and hydrophobicity is imparted to a part of the cellulose raw material 6.

The anionic cellulose raw material 6 may form a salt in which a cationic substance such as a metal ion is used as a counter ion. However, the cellulose raw material 6 preferably does not contain a cationic substance because when the cellulose raw material 6 does not contain a cation substance, generation of a byproduct can be suppressed and an effect of hydrophobization is excellent.

The content of the cationic substance in cellulose raw material 6 can be determined by various analysis methods. For example, an EPMA method using an electron beam microanalyzer, an elemental analysis by a fluorescent X-ray analysis method, or the like can be exemplified as a simple method. Examples of the method for removing the cationic substance from the anionic cellulose raw material 6 include a purification method in which the cellulose raw material 6 is repeatedly washed under an acidic condition and then repeatedly washed with pure water.

The bonding amount of the organic ammonium compound/amine 7 is preferably 0.8 equivalents or more and 2 equivalents or less with respect to the anionic functional group contained in cellulose raw material 6. In particular, when the bonding amount is 1 equivalent or more and 1.8 equivalents or less, it is not necessary to add a large amount of the organic onium compound/amine 7, which is more preferable. Although it is possible to disperse the cellulose raw material 6 to some extent even when the bonding amount of the organic onium compound/amine 7 is less than 0.8 equivalents, a long time and high energy are required for the dispersion treatment, and the fiber diameter of the obtained fiber increases, leading to deterioration of homogeneity. On the other hand, when the bonding amount is more than 2 equivalents, excessive addition of the organic onium compound/amine 7 may cause decomposition of the cellulose raw material 6 or a decrease in affinity to the dispersion medium, which is not preferable.

The type of the organic onium compound/amine 7 may be one type, or two or more types may be mixed and used. In particular, those having different structures of hydroxyl groups or hydrocarbon groups constituting organic onium or amine may be mixed and used. Also, the hydrocarbon group may be linear or branched.

Next, the cellulose raw material 6 to which the organic onium compound/amine 7 is bonded is dispersed in a solvent to prepare a suspension of the cellulose raw material 6 to which hydrophobicity is imparted. As the solvent, water is suitable, and the solvent preferably contains water in an amount of 50% or more. When the proportion of water in the solvent is 50% or less, the stability of the emulsion of the core particle precursor in a liquid state is inhibited in the second step described later.

The proportion of the cellulose raw material 6 in the dispersion liquid is preferably 0.1% or more and less than 10%. When the proportion is less than 0.1%, the solvent is excessive, and the productivity is impaired, which is not preferable. When the proportion is 10% or more, the suspension is rapidly thickened along with defibration of the cellulose raw material 6, so that uniform defibration treatment becomes difficult, which is not preferable.

The pH of the suspension is preferably 4 or more and 12 or less. In particular, when the suspension is made alkaline at a pH of 7 or more and 12 or less, the anionic functional group of the cellulose raw material 6 is ionized. As a result, the solvent easily enters the cellulose raw material 6 due to osmotic pressure effect, and micronization of the cellulose raw material 6 easily proceeds. When the pH is less than 4, the cellulose raw material 6 can be dispersed by a mechanical dispersion treatment, but a phenomenon similar to the case where the addition amount of the organic onium compound/amine 7 is too small occurs, resulting in deterioration of the homogeneity of the micronized cellulose 1 in the dispersion liquid. On the other hand, when the pH exceeds 12, the molecular weight of the anionic cellulose raw material 6 is reduced due to peeling reaction or alkali hydrolysis during the dispersion treatment, or yellowing of the dispersion liquid is promoted through formation of a terminal aldehyde or a double bond, which is not preferable.

The organic onium compound in the present embodiment has a cationic structure represented by Structural Formula (1).

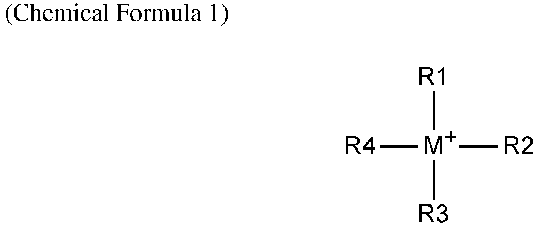

In Structural Formula (1), M is any of a nitrogen atom, a phosphorus atom, a hydrogen atom, and a sulfur atom, and R1, R2, R3, and R4 are any of a hydrogen atom, a hydrocarbon group, and a hydrocarbon group containing a hetero atom.

For example, when M is a nitrogen atom and R1, R2, R3, and R4 are all hydrogen atoms, the organic onium compound is ammonia. When three of R1, R2, R3, and R4 are hydrogen atoms, the organic onium compound is a primary amine, when two of R1, R2, R3, and R4 are hydrogen atoms, the organic onium compound is a secondary amine, when one of R1, R2, R3, and R4 is a hydrogen atom, the organic onium compound is a tertiary amine, and when zero of R1, R2, R3, and R4 is a hydrogen atom, the organic onium compound is a quaternary amine, and all of the amines are the organic onium compound in the present embodiment. Examples of the hydrocarbon group containing a hetero atom include an alkyl group, an alkylene group, an oxyalkylene group, an aralkyl group, an aryl group, and an aromatic group. R1, R2, R3, and R4 may form a ring.

The counter ion of the cationic structure of the organic onium compound is not particularly limited, but it is preferable that a hydroxide ion is a counter ion in consideration of adverse effects associated with contamination of metal ions, dispersibility in a dispersion medium, and the like.

In the first step, an inorganic alkali containing a metal salt such as a salt of an alkali metal, an alkaline earth metal, or the like may be added in addition to the organic onium compound.

The primary amine, the secondary amine, and the tertiary amine in the present embodiment have structures represented by Structural Formulae (2), (3), and (4) below, respectively. The structures when these amines are ionized and changed into ammonium ions are Structural Formulae (2)', (3)', and (4)', respectively.

(Chemical Formula 2)

NH₂ -R¹ ... (1)

NH₃⁺ -R¹ ... (1) '

NH- R²R³ ··· (2)

NH₂⁺ - R²R³ ··· (2) '

N - R⁴R⁵R⁶ ··· (3)

NH⁺- R⁴R⁵R⁶ ··· (3) '

In the structural formula, R1 to R6 are either a hydrocarbon group or a hydrocarbon group containing a hetero atom.

Examples of the primary amine, secondary amine, and tertiary amine include methylamine, ethylamine, propylamine, butylamine, n-octylamine, dimethylamine, diethylamine, dipropylamine, dibutylamine, hexylamine, 2-ethylhexylamine, dihexylamine, trimethylamine, triethylamine, tripropylamine, tributylamine, trioctylamine, trihexylamine, dioctylamine, dodecylamine, stearylamine, and oleylamine.

The suspension obtained using the anionic cellulose raw material 6 and the organic onium compound/amine 7 can be subjected to a dispersion treatment at a lower energy and in a shorter time than the case of using an inorganic alkali having a metal ion as a counter ion, and the homogeneity of the finally obtained dispersion liquid is also high. This is considered to be because when the organic onium compound/amine 7 is used, the diameter of the counter ion at the anionic moiety of the cellulose raw material 6 is large, providing a larger effect of further separating the micronized cellulose fibers from each other in the dispersion medium. Furthermore, when the organic onium compound/amine 7 is contained as the dispersion liquid, the viscosity and thixotropy of the dispersion liquid can be reduced as compared with those of the inorganic alkali, which is advantageous in ease of the dispersion treatment and subsequent handling. Furthermore, in the micronized cellulose 1 which has interacted with the organic onium compound/amine 7 via ionic bonding, hydrophilicity is reduced by steric repulsive force or hydrophobizing action based on the organic onium ion/ammonium ion 7a. As a result, in the second step described later, the affinity of the core particle precursor 2 in a liquid state for the emulsion droplets is increased, improving the stability of the droplets.

Subsequently, the suspension is subjected to a physical defibration treatment to micronize the cellulose raw material 6. The method of the physical defibration treatment is not particularly limited, and examples thereof include mechanical treatments using, for example, a high-pressure homogenizer, an ultrahigh-pressure homogenizer, a ball mill, a roll mill, a cutter mill, a planetary mill, a jet mill, an attritor, a grinder, a juicer mixer, a homomixer, an ultrasonic homogenizer, a nanogenizer, and counter collision in water. By performing the physical defibration treatment, the cellulose raw material 6 in the suspension is micronized, and a dispersion liquid of the micronized cellulose 1 which has been micronized to an extent such that at least one side of the structure thereof is on the order of nanometer can be obtained. The number average minor axis diameter and the number average major axis diameter of micronized cellulose 1 contained in the dispersion liquid can be adjusted by changing the time and number of times of the physical defibration treatment.

As described above, a dispersion liquid 4 of the micronized cellulose 1 shown in Fig. 2 is obtained. The micronized cellulose 1 is micronized to an extent such that at least one side of the structure thereof is on the order of nanometer.

Since the micronized cellulose 1 has a fiber shape derived from a microfibril structure, the micronized cellulose 1 used in the production method of the present embodiment preferably has a fiber shape with a size of the following ranges. That is, the number average minor axis diameter in the minor axis diameter of the fibrous micronized cellulose 1 may be 1 nm or more and 1,000 nm or less, and preferably 2 nm or more and 500 nm or less. Here, when the number average minor axis diameter is less than 1 nm, a highly crystalline and rigid micronized cellulose fiber structure cannot be obtained, and thus stabilization of the emulsion and a polymerization reaction using an emulsion as a template cannot be performed. On the other hand, when the number average minor axis diameter exceeds 1,000 nm, the size of the fiber becomes too large to stabilize the emulsion, and thus it becomes difficult to control the size and shape of the composite particles 5 to be obtained.

The number average major axis diameter of the micronized cellulose 1 is not particularly limited, but may be preferably five times or more the number average minor axis diameter. When the number average major axis diameter is less than 5 times the number average minor axis diameter, the size and shape of the composite particles 5 cannot be sufficiently controlled, which is not preferable.

The number average minor axis diameter of the micronized cellulose 1 is determined as an average value of minor axis diameters (minimum diameters) of 100 fibers measured by transmission electron microscope observation and atomic force microscope observation. The number average major axis diameter of the micronized cellulose 1 is determined as an average value of major axis diameters (maximum diameters) of 100 fibers measured by transmission electron microscope observation and atomic force microscope observation.

In the dispersion liquid 4, the organic onium compound/amine 7 is bonded to the micronized cellulose 1, and good dispersion is exhibited. The dispersion liquid 4 can be used as a stabilizer of the O/W type emulsion as it is or by being diluted, concentrated, or the like in a subsequent step.

The type and crystal structure of cellulose constituting the micronized cellulose 1 are also not particularly limited. Specifically, as a raw material composed of the cellulose I type crystal, for example, non-wood-based natural cellulose such as cotton linters, bamboo, hemp, bagasse, kenaf, bacterial cellulose, ascidian cellulose, and Valonia cellulose can be used in addition to wood-based natural cellulose. Further, regenerated cellulose typified by rayon fiber and cupra fiber composed of a cellulose II type crystal can also be used. From the viewpoint of easy material procurement, it is preferable to use wood-based natural cellulose as a raw material. The wood-based natural cellulose is not particularly limited, and those generally used for producing cellulose nanofibers, such as softwood pulp, hardwood pulp, and waste paper pulp can be used. Softwood pulp is preferable from the viewpoint of ease of purification and micronization.

Further, the cellulose raw material 6 is preferably chemically modified. More specifically, an anionic functional group is preferably introduced into the crystal surface of the cellulose raw material 6. This is because the introduction of the anionic functional group into the crystal surface of cellulose raw material 6 makes it easy for the solvent to infiltrate between cellulose crystals due to osmotic pressure effect, so that the micronization of the cellulose raw material 6 easily proceeds.

The type of the anionic functional group to be introduced into the crystal surface of cellulose and the introduction method thereof are not particularly limited, but a carboxy group or a phosphate group is preferable. From the viewpoint of ease of selective introduction to the cellulose crystal surface, a carboxy group is preferable.

The method for introducing a carboxy group into the crystal surface of cellulose is not particularly limited. Specifically, carboxymethylation may be performed by, for example, reacting cellulose with monochloroacetate or sodium monochloroacetate in a high-concentration aqueous alkali solution. In addition, a carboxy group may be introduced by directly reacting cellulose with a carboxylic anhydride-based compound of maleic acid, phthalic acid, or the like gasified in an autoclave. Furthermore, a technique may be used in which a co-oxidizing agent is used in the presence of an N-oxyl compound having high selectivity for oxidation of the alcoholic primary carbon, such as TEMPO, while maintaining the structure as much as possible under a relatively mild aqueous condition. For the selectivity of the carboxy group introduction moiety and the reduction of the environmental load, oxidation using an N-oxyl compound is more preferable.

Here, examples of the N-oxyl compound include TEMPO (2,2,6,6-tetramethylpiperidinyl-1-oxyl radical), 2,2,6,6-tetramethyl-4-hydroxypiperidine-1-oxyl, 4-methoxy-2,2,6,6-tetramethylpiperidine-N-oxyl, 4-ethoxy-2,2,6,6-tetramethylpiperidine-N-oxyl, and 4-acetamide-2,2,6,6-tetramethylpiperidine-N-oxyl. Among them, TEMPO having high reactivity is preferable. The used amount of the N-oxyl compound may be an amount as a catalyst, and is not particularly limited. The used amount is usually about 0.01 to 5.0 mass% based on the solid content of the wood-based natural cellulose to be oxidized.

Examples of the oxidation method using an N-oxyl compound include a method in which wood-based natural cellulose is dispersed in water and oxidized in the presence of an N-oxyl compound. At this time, it is preferable to use a co-oxidizing agent together with the N-oxyl compound. In this case, in the reaction system, the N-oxyl compound is sequentially oxidized by the co-oxidizing agent to produce an oxoammonium salt, and cellulose is oxidized by the oxoammonium salt. According to this oxidation treatment, the oxidation reaction smoothly proceeds even under mild conditions, improving the introduction efficiency of the carboxy group. When the oxidation treatment is performed under mild conditions, the crystal structure of cellulose is easily maintained.

As the co-oxidizing agent, any oxidizing agent can be used as long as it can promote the oxidation reaction, such as halogen, hypohalogenous acid, halogenous acid, perhalogenic acid, or a salt thereof, a halogen oxide, a nitrogen oxide, or a peroxide. Sodium hypochlorite is preferable from the viewpoint of availability and reactivity. The used amount of the co-oxidizing agent may be an amount that can promote the oxidation reaction, and is not particularly limited. The amount is usually about 1 to 200 mass% based on the solid content of the wood-based natural cellulose to be oxidized.

In addition, at least one type of compound selected from the group consisting of a bromide and an iodide may be further used in combination with the N-oxyl compound and the co-oxidizing agent. As a result, the oxidation reaction can smoothly proceed, thus making it possible to improve the introduction efficiency of the carboxy group. As such a compound, sodium bromide or lithium bromide is preferable, and sodium bromide is more preferable from the viewpoint of cost and stability. The used amount of the compound may be an amount capable of promoting the oxidation reaction, and is not particularly limited. The amount is usually about 1 to 50 mass% based on the solid content of the wood-based natural cellulose to be oxidized.

The reaction temperature of the oxidation reaction is preferably 4 to 80°C, and more preferably 10 to 70°C. When the reaction temperature is lower than 4°C, the reactivity of the reagent decreases and the reaction time becomes long. When the reaction temperature is higher than 80°C, side reactions are promoted to reduce the molecular weight of the sample, so that a highly crystalline and rigid micronized cellulose fiber structure is disintegrated, and the cellulose fiber cannot be used as a stabilizer for the O/W type emulsion.

The reaction time of the oxidation treatment can be appropriately set in consideration of the reaction temperature, the desired amount of the carboxy group, and the like, and is not particularly limited, but is usually about 10 minutes to 5 hours.

The pH of the reaction system during the oxidation reaction is not particularly limited, but is preferably 9 to 11. When the pH is 9 or more, the reaction can be efficiently advanced. When the pH exceeds 11, side reactions proceed, and decomposition of the sample may be promoted. In addition, in the oxidation treatment, the carboxy group is generated as the oxidation proceeds, so that the pH in the system decreases. It is therefore preferable to maintain the pH of the reaction system at 9 to 11 during the oxidation treatment. Examples of the method for maintaining the pH of the reaction system at 9 to 11 include a method of adding an aqueous alkali solution according to the decrease in pH.

Examples of the aqueous alkali solution include aqueous solutions of organic onium compounds, such as an aqueous sodium hydroxide solution, an aqueous lithium hydroxide solution, an aqueous potassium hydroxide solution, an aqueous ammonia solution, an aqueous tetramethylammonium hydroxide solution, an aqueous tetraethylammonium hydroxide solution, an aqueous tetrabutylammonium hydroxide solution, and an aqueous benzyltrimethylammonium hydroxide solution. An aqueous sodium hydroxide solution is preferable from the viewpoint of cost and the like.

The oxidation reaction with the N-oxyl compound can be stopped by adding an alcohol to the reaction system. At this time, it is preferable to maintain the pH of the reaction system within the above range. As the alcohol to be added, low-molecular-weight alcohols such as methanol, ethanol, and propanol are preferable in order to quickly terminate the reaction. Ethanol is particularly preferable from the viewpoint of the safety of by-products produced by the reaction and the like.

The reaction solution after the oxidation treatment may be directly subjected to the micronization step, but in order to remove a catalyst such as an N-oxyl compound, impurities, and the like, it is preferable to recover oxidized cellulose contained in the reaction solution and wash the recovered cellulose with a washing liquid. The oxidized cellulose can be recovered by a known method such as filtration using a glass filter or a nylon mesh having a pore size of 20 µm. Pure water is preferable as the washing liquid used for washing the oxidized cellulose.

When the obtained TEMPO-oxidized cellulose is subjected to a defibration treatment, a cellulose single nanofiber (CSNF) having a uniform fiber width of 3 nm is obtained. When the CSNF is used as a raw material of the micronized cellulose 1 of the composite particles 5, the particle size of the O/W type emulsion to be obtained tends to be uniform due to the uniform structure of the CSNF.

As described above, the CSNF used in the present embodiment can be obtained by the step of oxidizing the cellulose raw material and the step of micronizing, dispersing, and liquefying the cellulose raw material. The content of the carboxy group to be introduced into the CSNF is preferably 0.1 mmol/g or more and 5.0 mmol/g or less, and more preferably 0.5 mmol/g or more and 2.0 mmol/g or less. Here, when the content of the carboxy groups is less than 0.1 mmol/g, a solvent entering action due to osmotic pressure effect does not act between cellulose microfibrils, and it is therefore difficult to micronize and uniformly disperse cellulose. In addition, when the content exceeds 5.0 mmol/g, the molecular weight of the cellulose microfibril is reduced due to side reactions associated with the chemical treatment. As a result, a highly crystalline and rigid micronized cellulose fiber structure cannot be obtained, and the cellulose fiber cannot be used as a stabilizer for the O/W type emulsion.

The dispersion liquid 4 may contain, as necessary, components other than the cellulose and the components used for pH adjustment as long as the effects of the present invention are not impaired. The other components are not particularly limited, and can be appropriately selected from known additives according to the use of the composite particles 5 and the like. Specific examples thereof include organic metal compounds such as alkoxysilane or a hydrolyzate thereof, inorganic layered compounds, inorganic needle minerals, antifoaming agents, inorganic particles, organic particles, lubricants, antioxidants, antistatic agents, ultraviolet absorbers, stabilizers, magnetic powders, orientation promotors, plasticizers, crosslinking agents, magnetic bodies, pharmaceuticals, agrochemicals, perfumes, adhesives, enzymes, pigments, dyes, deodorants, metals, metal oxides, and inorganic oxides.

### (Second step)

The second step is a step of coating the surface of the core particle precursor 2 in a liquid state with the micronized cellulose 1 in the dispersion liquid 4 of the micronized cellulose 1 obtained in the first step to stabilize the core particle precursor 2 as an emulsion.

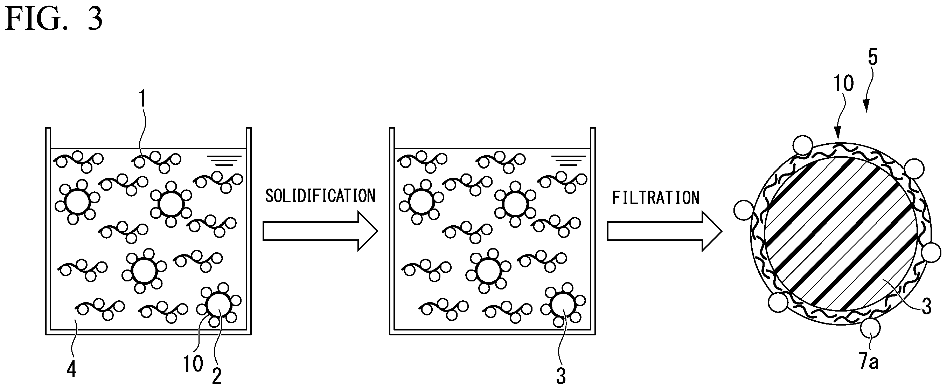

Specifically, the second step is a step of adding the core particle precursor 2 in a liquid state to the dispersion liquid 4 obtained in the first step and dispersing the core particle precursor 2 in the dispersion liquid 4 as droplets to coat the surface of the droplets with the micronized cellulose 1, thereby preparing an O/W type emulsion stabilized by the micronized cellulose layer 10 as shown on the left side of Fig. 3.

The method for preparing the O/W type emulsion is not particularly limited, but a general emulsification treatment, for example, various homogenizer treatments or mechanical stirring treatments can be used. Specific examples thereof include mechanical treatments using, for example, a high-pressure homogenizer, an ultrahigh-pressure homogenizer, a universal homogenizer, a ball mill, a roll mill, a cutter mill, a planetary mill, a jet mill, an attritor, a grinder, a juicer mixer, a homomixer, an ultrasonic homogenizer, a nanogenizer, counter collision in water, and a paint shaker. In addition, a plurality of mechanical treatments may be used in combination.

For example, when an ultrasonic homogenizer is used, a polymerizable monomer is added to the micronized cellulose dispersion liquid obtained in the first step to form a mixed solvent, and the tip of the ultrasonic homogenizer is inserted into the mixed solvent to perform an ultrasonic treatment. The treatment condition of the ultrasonic homogenizer is not particularly limited, but for example, the frequency is generally 20 kHz or more, and the output is generally 10 W/cm² or more. The treatment time is also not particularly limited, but is usually from about 10 seconds to 1 hour.

By the ultrasonic treatment, the droplets of the core particle precursor 2 are dispersed in the dispersion liquid 4 to proceed emulsification, and the micronized cellulose 1 is further selectively adsorbed to the liquid/liquid interface between the droplets and the dispersion liquid 4. Whereby, the droplets are coated with the micronized cellulose 1 to form a stable structure as an O/W type emulsion. An emulsion stabilized by solid matters adsorbed at the liquid/liquid interface as described above is referred to as "Pickering emulsion" from the academic viewpoint. The mechanism in which a Pickering emulsion is formed by the micronized cellulose fibers as described above is not clear. However, it is considered that cellulose, which has a hydrophilic site derived from a hydroxyl group and a hydrophobic site derived from a hydrocarbon group in its molecular structure, exhibits amphiphilicity, and thus is adsorbed to the liquid/liquid interface between a hydrophobic monomer and a hydrophilic solvent due to its amphiphilicity.

The O/W type emulsion structure can be confirmed by optical microscope observation. The particle size of the O/W type emulsion is not particularly limited, but is usually about 0.1 µm to 1,000 µm.

In the O/W type emulsion structure, the thickness of the micronized cellulose layer 10 formed on the surface layer of the droplet is not particularly limited, but is usually about 3 nm to 1,000 nm. The thickness of the micronized cellulose layer 10 can be measured using, for example, Cryo-TEM.

The material of the core particle precursor 2 in a liquid state that can be used in the second step is not particularly limited as long as it is any one of the following materials: (1) a monomer that is incompatible with water and has a polymerizable functional group (polymerizable monomer) and can form a solid polymer through a polymerization reaction; (2) a thermoplastic polymer that is melted in a liquid state by heating and phase transitions to a solid at room temperature; and (3) a non-curable polymer that is dissolved in a liquid state by a solvent and becomes a solid at room temperature by removal of the solvent.

In the above (1), the polymerizable monomer has at least one polymerizable functional group. The polymerizable monomer having one polymerizable functional group is also referred to as a monofunctional monomer. The polymerizable monomer having two or more polymerizable functional groups is also referred to as a polyfunctional monomer. The type of the polymerizable monomer is not particularly limited, and examples thereof include (meth)acrylic monomers and vinyl monomers. In addition, it is also possible to use a polymerizable monomer having a cyclic ether structure such as an epoxy group or an oxetane structure (for example, ε-caprolactone).

The notation of "(meth)acrylate" means to include both "acrylate" and "methacrylate".

Examples of the monofunctional (meth)acrylic monomer include 2-hydroxyethyl (meth)acrylate, 2-hydroxypropyl (meth)acrylate, 2-hydroxybutyl (meth)acrylate, n-butyl (meth)acrylate, isobutyl (meth)acrylate, t-butyl (meth)acrylate, glycidyl (meth)acrylate, acryloylmorpholine, N-vinylpyrrolidone, tetrahydrofurfuryl acrylate, cyclohexyl (meth)acrylate, 2-ethylhexyl (meth)acrylate, isobornyl (meth)acrylate, isodecyl (meth)acrylate, lauryl (meth)acrylate, tridecyl (meth)acrylate, cetyl (meth)acrylate, stearyl (meth)acrylate, benzyl (meth)acrylate, 2-ethoxyethyl (meth)acrylate, 3-methoxybutyl (meth)acrylate, ethylcarbitol (meth)acrylate, (meth)acrylate phosphate, ethylene oxide-modified phosphate (meth)acrylate, phenoxy (meth)acrylate, ethyleneoxide-modified phenoxy (meth)acrylate, propylene oxide-modified phenoxy (meth)acrylate, nonylphenol (meth)acrylate, ethylene oxide-modified nonylphenol (meth)acrylate, propylene oxide-modified nonylphenol (meth)acrylate, methoxydiethylene glycol (meth)acrylate, methoxypolythylene glycol (meth)acrylate, methoxypropylene glycol (meth)acrylate, 2-(meth)acryloyloxyethyl-2-hydroxypropylphthalate, 2-hydroxy-3-phenoxypropyl (meth)acrylate, 2-(meth)acryloyloxyethyl hydrogenphthalate, 2-(meth)acryloyl oxypropylhydrogenphthalate, 2-(meth)acryloyloxypropylhexahydrohydrogenphthalate, 2-(meth)acryloyloxypropyltetrahydrohydrogenphthalate, dimethylaminoethyl (meth)acrylate, trifluoroethyl (meth)acrylate, tetrafluoropropyl (meth)acrylate, hexafluoropropyl (meth)acrylate, octafluoropropyl (meth)acrylate, and adamantane derivative mono(meth)acrylates such as adamantyl acrylates having a monovalent mono(meth)acrylate derived from 2-adamantan and adamantan diol.

Examples of the bifunctional (meth)acrylic monomer include di(meth)acrylates such as ethylene glycol di(meth)acrylate, diethylene glycol di(meth)acrylate, butanediol di(meth)acrylate, hexanediol di(meth)acrylate, nonanediol di(meth)acrylate, ethoxylated hexanediol di(meth)acrylate, propoxylated hexanediol di(meth)acrylate, diethylene glycol di(meth)acrylate, polyethylene glycol di(meth)acrylate, tripropylene glycol di(meth)acrylate, polypropylene glycol di(meth)acrylate, neopentyl glycol di(meth)acrylate, ethoxylated neopentyl glycol di(meth)acrylate, tripropylene glycol di(meth)acrylate, and hydroxypivalic acid neopentyl glycol di(meth)acrylate.

Examples of the tri- or higher functional (meth)acrylic monomer include tri(meth)acrylates such as trimethylolpropane tri(meth)acrylate, ethoxylated trimethylolpropane tri(meth)acrylate, propoxylated trimethylolpropane tri(meth)acrylate, tris 2-hydroxyethyl isocyanurate tri(meth)acrylate, and glycerin tri(meth)acrylate; trifunctional (meth)acrylate compounds such as pentaerythritol tri(meth)acrylate, dipentaerythritol tri(meth)acrylate, and ditrimethylolpropane tri(meth)acrylate; tri- or higher functional polyfunctional (meth)acrylate compounds such as pentaerythritol tetra(meth)acrylate, ditrimethylolpropane tetra(meth)acrylate, dipentaerythritol tetra(meth)acrylate, dipentaerythritol penta(meth)acrylate, ditrimethylolpropane penta(meth)acrylate, dipentaerythritol hexa(meth)acrylate, and ditrimethylolpropane hexa(meth)acrylate; and polyfunctional (meth)acrylate compounds in which a part of these (meth)acrylates has been substituted with an alkyl group or ε-caprolactone.

As the monofunctional vinyl monomer, for example, a liquid that is incompatible with water at normal temperature, such as a vinyl ether monomer, a vinyl ester monomer, an aromatic vinyl monomer, and particularly, styrene and a styrene monomer are preferable.

Examples of the (meth)acrylate among the monofunctional vinyl monomers include methyl (meth)acrylate, ethyl (meth)acrylate, butyl (meth)acrylate, t-butyl (meth)acrylate, 2-ethylhexyl (meth)acrylate, lauryl (meth)acrylate, alkyl (meth)acrylate, tridecyl (meth)acrylate, stearyl (meth)acrylate, cyclohexyl (meth)acrylate, benzyl (meth)acrylate, isobornyl (meth)acrylate, glycidyl (meth)acrylate, tetrahydrofurfuryl (meth)acrylate, allyl (meth)acrylate, diethylaminoethyl (meth)acrylate, trifluoroethyl (meth)acrylate, heptafluorodecyl (meth)acrylate, dicyclopentenyl (meth)acrylate, dicyclopentenyl oxyethyl (meth)acrylate, and tricyclodecanyl (meth)acrylate.

Examples of the monofunctional aromatic vinyl monomer include styrene, α-methylstyrene, o-methylstyrene, m-methylstyrene, p-methylstyrene, ethylstyrene, isopropenyltoluene, isobutyltoluene, tert-butylstyrene, vinylnaphthalene, vinylbiphenyl, and 1,1-diphenylethylene.

Examples of the polyfunctional vinyl monomer include polyfunctional groups having an unsaturated bond, such as divinylbenzene. A liquid that is incompatible with water at normal temperature is preferable.

Specific examples of the polyfunctional vinyl monomer include (1) divinyls such as divinylbenzene, 1,2,4-trivinylbenzene, and 1,3,5-trivinylbenzene, (2) dimethacrylates such as ethylene glycol dimethacrylate, diethylene glycol dimethacrylate, triethylene glycol dimethacrylate, polyethylene glycol dimethacrylate, 1,3-propylene glycol dimethacrylate, 1,4-butylene glycol dimethacrylate, 1,6-hexamethylene glycol dimethacrylate, neopentyl glycol dimethacrylate, dipropylene glycol dimethacrylate, polypropylene glycol dimethacrylate, and 2,2-bis(4-methacryloxydiethoxyphenyl)propane, (3) trimethacrylates such as trimethylolpropane trimethacrylate and triethylolethane trimethacrylate, (4) diacrylates such as ethylene glycol diacrylate, diethylene glycol diacrylate, triethylene glycol diacrylate, polyethylene glycol diacrylate, 1,3-dipropylene glycol diacrylate, 1,4-dibutylene glycol diacrylate, 1,6-hexylene glycol diacrylate, neopentyl glycol diacrylate, dipropylene glycol diacrylate, polypropylene glycol diacrylate, 2,2-bis(4-acryloxypropoxyphenyl)propane, and 2,2-bis(4-acryloxydiethoxyphenyl)propane, (5) triacrylates such as trimethylolpropane triacrylate and triethylolethane triacrylate, (6) tetraacrylates such as tetramethylolmethane tetraacrylate, and (7) others, for example, tetramethylene bis(ethyl fumarate), hexamethylene bis(acrylamide), and triallyl cyanurate, and triallyl isocyanurate.

Specific examples of the functional styrene monomer include divinylbenzene, trivinylbenzene, divinyltoluene, divinylnaphthalene, divinylxylene, divinylbiphenyl, bis(vinylphenyl)methane, bis(vinylphenyl)ethane, bis(vinylphenyl)propane, and bis(vinylphenyl)butane.

In recent years, in consideration of the environment, there is a strong demand for a biodegradable powder that can be decomposed by natural microorganisms after use and finally converted into water and carbon dioxide.

A biodegradable material can be used for the core particle 3 of the present embodiment. The biodegradable material is not particularly limited as long as it has biodegradability and is not soluble in water. Specific examples thereof include cellulose acetate derivatives such as cellulose acetate, cellulose acetate butyrate, and cellulose acetate propionate; polysaccharides such as chitin and chitosan; polylactic acids such as polylactic acid and a copolymer of lactic acid and another hydroxy carboxylic acid; dibasic acid polyesters such as polybutylene succinate, polyethylene succinate, and polybutylene adipate; polycaprolactones such as polycaprolactone and a copolymer of caprolactone and hydroxy carboxylic acid; polyhydroxybutyrates such as polyhydroxybutyrate and a copolymer of polyhydroxybutyrate and hydroxy carboxylic acid; aliphatic polyesters such as polyhydroxybutyric acid and a copolymer of polyhydroxybutyric acid and another hydroxy carboxylic acid; polyamino acids; polyester polycarbonates; and natural resins such as rosin. These compounds can be used alone or in combination of two or more types thereof.

In addition to these, a polyether resin, a polyester resin, a polyurethane resin, an epoxy resin, an alkyd resin, a spiroacetal resin, a polybutadiene resin, a polythiol polyene resin, and the like having at least one polymerizable functional group can be used, and the material thereof is not particularly limited.

The various polymerizable monomers described above may be used alone, or may be used in combination of two or more types thereof.

In the above (2), the thermoplastic polymer preferably has a melting point of 40°C or higher and 80°C or lower. When the melting point is lower than 40°C, it is difficult to maintain the shape as a solid at room temperature, and the use environment is extremely limited, which is not preferable. On the other hand, when the melting point is higher than 80°C, it is difficult to maintain the molten state in the micronized cellulose dispersion liquid in the production process, which is not preferable. The melting point is more preferably 45°C or higher and 75°C or lower. In addition, the melt flow rate (MFR) at a temperature equal to or higher than the melting point is preferably 10 or more. When the MFR is less than 10, a large amount of emulsification energy is required in the above emulsification treatment, which is not preferable.

In the above (3), the non-curable polymer is a polymer that is dissolved in a solvent other than water and has a liquid state. Here, the solvent for dissolving the non-curable polymer preferably has a water solubility at 20°C of 20 g or more and 2,000 g or less with respect to 1 L of water. When the solubility in water is less than 20 g, the affinity between droplets containing the solvent and the micronized cellulose 1 is low, and the emulsion stabilizing effect provided by the micronized cellulose 1 is deteriorated. On the other hand, when the solubility in water is more than 2,000 g, the shape of the droplet cannot be maintained because the diffusion rate of the solvent in the micronized cellulose dispersion liquid is high. As a result, the droplet coating effect provided by the micronized cellulose 1 is impaired.

The materials of the thermoplastic polymer and the non-curable polymer are not limited as long as the function of the present embodiment is not impaired. For example, a polymer obtained from the above-described various monofunctional monomers or polymerizable monomers having a cyclic ether structure such as an epoxy group or an oxetane structure as a starting material, or a polyether resin, a polyester resin, a polyurethane resin, an epoxy resin, an alkyd resin, a spiroacetal resin, a polybutadiene resin, a polythiol polyene resin, or the like can be used.

The weight ratio between the dispersion liquid 4 and the core particle precursor 2 in a liquid state in the second step is not particularly limited, but the content of the core particle precursor 2 is preferably 1 part by mass or more and 50 parts by mass or less based on 100 parts by mass of the dispersion liquid 4. It is not preferable that the content of the core particle precursor 2 is 1 part by mass or less because the yield of the composite particles 5 is reduced. It is not preferable that the content of the core particle precursor 2 is more than 50 parts by mass because it is difficult to uniformly cover the droplets with the micronized cellulose 1.

When a polymerizable monomer is used as the core particle precursor 2 in a liquid state, a polymerization initiator may be contained in advance. Examples of a general polymerization initiator include radical initiators such as organic peroxides and azo polymerization initiators.

Examples of the organic peroxide include peroxyketal, hydroperoxide, dialkyl peroxide, diacyl peroxide, peroxycarbonate, and peroxyester.

Examples of the azo polymerization initiator include ADVN and AIBN. Examples thereof include 2,2-azobis(isobutyronitrile) (AIBN), 2,2-azobis(2-methylbutyronitrile) (AMBN), 2,2-azobis(2,4-dimethylvaleronitrile) (ADVN), 1,1-azobis(1-cyclohexanecarbonitrile) (ACHN), dimethyl-2,2-azobisisobutyrate (MAIB), 4,4-azobis(4-cyanovaleric acid) (ACVA), 1,1-azobis(1-acetoxy-1-phenylethane), 2,2-azobis(2-methylbutyramide), 2,2-azobis(4-methoxy-2,4-dimethylvaleronitrile), 2,2-azobis(2-methylamidinopropane)dihydrochloride, 2,2-azobis[2-(2-imidazoline-2-yl)propane], 2,2-azobis[2-methyl-N-(2-hydroxyethyl)propionamide], 2,2-azobis(2,4,4-trimethylpentane), 2-cyano-2-propylazoformamide, 2,2-azobis(N-butyl-2-methylpropionamide), and 2,2-azobis(N-cyclohexyl-2-methylpropionamide).

When a polymerizable monomer containing a polymerization initiator in advance is used in the second step, the polymerization initiator is contained in the droplets of the emulsion when the O/W type emulsion is formed. This proceeds the polymerization reaction of polymerizing the monomer inside the droplets of the emulsion in the third step described later.

The weight ratio between the polymerizable monomer and the polymerization initiator in the second step is not particularly limited, but usually, the content of the polymerization initiator is preferably 0.1 parts by mass or more based on 100 parts by mass of the polymerizable monomer. When the content of the polymerization initiator is less than 0.1 parts by mass, the polymerization reaction does not sufficiently proceed, and the yield of the composite particles 5 decreases, which is not preferable.

The polymerizable monomer may contain a functional component other than the polymerization initiator in advance. Specific examples of the functional component include magnetic bodies, pharmaceuticals, agrochemicals, perfumes, adhesives, enzymes, pigments, dyes, deodorants, metals, metal oxides, and inorganic oxides. When the functional component other than the polymerization initiator is contained in advance in the polymerizable monomer, the functional component can be contained in the core particle of the produced composite particles 5, and the function according to the application can be expressed.

### (Third step)

The third step is a step of solidifying the droplets containing the core particle precursor 2 to obtain the composite particles 5 in which the core particle 3 is coated with the micronized cellulose layer 10 as shown in Fig. 3.

The specific method of solidifying the droplets varies depending on the material of the droplets. When a polymerizable monomer is used, the polymerization method is not particularly limited, and can be appropriately determined depending on the type of the polymerizable monomer used and the type of the polymerization initiator. An example of the polymerization method is a suspension polymerization method.

The specific suspension polymerization method is also not particularly limited, and can be performed using a known method.

The droplets can be solidified by, for example, heating the O/W type emulsion obtained in the second step while stirring. The stirring method is also not particularly limited, and a known method can be used, and specifically, a disper or a stirring bar can be used.

Solidification may be possible only by a heat treatment without stirring. The temperature condition during heating can be appropriately determined depending on the type of the polymerizable monomer and the type of the polymerization initiator, and may be, for example, 20°C or higher and 150°C or lower. When the temperature is lower than 20°C, the reaction rate of polymerization may decrease, and when the temperature is higher than 150°C, the micronized cellulose 1 may be modified.

The time for the polymerization reaction can be appropriately determined depending on the type of the polymerizable monomer and the type of the polymerization initiator, and may be, for example, about 1 hour to 24 hours.

The polymerization reaction may be performed by irradiation treatment with ultraviolet light which is a type of electromagnetic waves. In addition to the electromagnetic wave, particle beams such as an electron beam may be used.

When a thermoplastic polymer is used, the molten polymer is solidified by phase transition. As a method of phase transition, cooling is typical. At this time, the crystallinity of the thermoplastic polymer can be controlled by controlling the cooling rate. Specific examples of the cooling method include a method of diffusing the molten polymer into water or ice water, a method of bringing the molten polymer into contact with a refrigerant such as liquid nitrogen, and a method of allowing the molten polymer to cool.

When a non-curable polymer is used, the non-curable polymer is solidified by removing the solvent. The method for removing the solvent is not particularly limited, and examples thereof include a heating method, a decompression method, a method utilizing irradiation with electromagnetic waves, and a combination thereof.

When the third step is completed, substantially spherical composite particles 5 in which the core particle 3 mainly composed of a polymer is coated with the micronized cellulose 1 are obtained. In the composite particles 5 immediately after being obtained, the organic onium cation/ammonium ion 7a is bonded to at least a part of the micronized cellulose 1 present on the surface of the particle. In addition, the particle sizes of the composite particles 5 are relatively uniform, and the uniformity is high.

The dispersion liquid immediately after completion of the third step is in a state where the composite particles 5, a large amount of water, and the micronized cellulose 1 released without being integrated with the core particle 3 are mixed.

As a recovery and purification method when only the composite particles 5 are taken out from the dispersion liquid, washing by centrifugation, filtration washing, and the like can be exemplified. As a washing method by centrifugation, a known method can be used. For example, the composite particles 5 can be recovered by repeating an operation of precipitating the composite particles 5 in the dispersion liquid by centrifugation, removing the supernatant, then redispersing the composite particles 5 in a mixed solvent of water and methanol, and finally removing the residual solvent from the precipitate obtained by centrifugation. A known method can also be used for filtration washing. For example, the composite particles 5 can be recovered by repeating suction filtration with water and methanol using a PTFE membrane filter having a pore size of 0.1 µm and finally removing the residual solvent from the paste remaining on the membrane filter.

In any case, the method for removing the residual solvent is not particularly limited, and the removal can be performed by air drying or heat drying in an oven. The dry solid containing the composite particles 5 is not in the form of a film or an aggregate, and is obtained as a fine powder.

### (Fourth step)

The fourth step is a step of removing the organic onium cation/ammonium ion 7a from the produced composite particles 5. The fourth step is performed after the third step as necessary, and may be omitted if unnecessary in view of the use of the composite particles 5 and the like.

As described above, in the composite particles 5 immediately after production, a part of the micronized cellulose 1 has the organic onium cation/ammonium ion 7a as a counter ion. When the presence of the organic onium cation/ammonium ion 7a is not preferable or when it is desired to bond a cationic substance different from the organic onium cation/ammonium ion 7a to the micronized cellulose 1 as ionic bonding in relation to the use of the composite particles 5 or the like, the organic onium cation/ammonium ion 7a may be removed by performing the fourth step.

Examples of the method for removing the organic onium cation/ammonium ion 7a include ion exchange. The composite particles 5 having the organic onium cation/ammonium ion 7a are dispersed in an aqueous solution containing an acidic compound, and further washed with pure water, whereby the organic onium cation/ammonium ion 7a can be removed. A cationic substance different from the organic onium cation/ammonium ion 7a may be bonded to the anionic functional group of the micronized cellulose 1 via ionic bonding by adding a desired cationic compound after the organic onium cation/ammonium ion 7a has been removed.

As described above, the composite particles 5 according to the present embodiment have high biocompatibility and good dispersion stability derived from the micronized cellulose 1 present as the micronized cellulose layer 10 on the surface.

Moreover, since the composite particles are formed using the micronized cellulose 1 to which the organic onium cation/ammonium ion 7a is bonded, the core particle 3 can be formed of a wide variety of resins. Thus, composite particles that can be used for a wide variety of applications can be obtained. For example, composite particles having thermoplasticity, which have been conventionally difficult to produce, can also be easily produced.

Furthermore, the micronized cellulose 1 becomes amphiphilic due to acquisition of hydrophobicity provided by the organic onium cation/ammonium ion 7a. As a result, the yield of the composite particles 5 is significantly improved, and the particle size distribution thereof is made uniform, so that the composite particles 5 are excellent as a material.

The dry solid of the composite particles 5 is obtained as a fine powder while exhibiting the material characteristics of the micronized cellulose 1, and is easily redispersed in the solvent because there is no aggregation of particles. Since the micronized cellulose 1 and core particle 3 are inseparably bonded, the composite particles 5 exhibit stable dispersion derived from the characteristics of the micronized cellulose 1 even after redispersion.

The method for producing the composite particles 5 according to the present embodiment can easily provide particles exhibiting the characteristics of the micronized cellulose 1 in a state where the particles can be distributed in a dry state. Therefore, the load on the environment is low, and effects such as reduction in transportation cost, reduction in spoilage risk, improvement in addition efficiency as an additive, and improvement in kneading efficiency with the hydrophobic resin can also be expected.

Examples of the present invention will be further described with reference to Examples. The technical scope of the present invention is not limited to the specific contents of Examples.

In the following description, "%" means mass% unless otherwise specified.

### <Example 1>

### (First step: step of obtaining micronized cellulose dispersion liquid)

### (TEMPO oxidation of wood cellulose)

An amount of 70 g of softwood kraft pulp was suspended in 3,500 g of distilled water, then a solution obtained by dissolving 0.7 g of TEMPO and 7 g of sodium bromide in 350 g of distilled water was added thereto, and the mixture was cooled to 20°C. To the mixture, 450 g of a 2 mol/L aqueous sodium hypochlorite solution having a density of 1.15 g/mL was added dropwise to start an oxidation reaction. The temperature in the system was always maintained at 20°C, and the pH was maintained at 10 by adding a 0.5N aqueous sodium hydroxide solution during the reaction. When the total addition amount of sodium hydroxide based on the weight of cellulose reached 3.50 mmol/g, about 100 mL of ethanol was added to stop the reaction. Thereafter, filtration washing with distilled water was repeated using a glass filter to obtain oxidized pulp. The obtained oxidized pulp was added to an aqueous hydrogen chloride solution adjusted to pH 2, dehydrated, and then washed with water to perform a first acid treatment. Subsequently, the resulting pulp was added to an aqueous hydrogen chloride solution adjusted to pH 3, dehydrated, then washed with water to perform a second acid treatment. Thereafter, water washing and dehydration were repeated to obtain a purified oxidized pulp.

### (IR measurement of oxidized pulp)

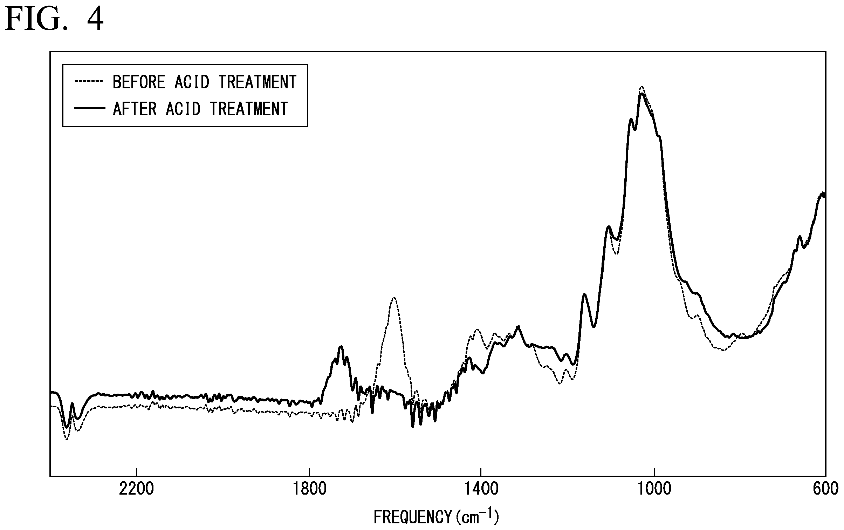

Oxidized pulp (before acid treatment), which has been washed with distilled water after the TEMPO oxidation reaction, and oxidized pulp (after acid treatment), which has been acid-treated with an aqueous hydrogen chloride solution after the previous water washing and then washed with water, were each sandwiched between slide glasses, dried at 70°C for 3 hours, and subjected to FT-IR measurement (FT/IR-6300 manufactured by JASCO Corporation) by an ATR method. The results are shown in Fig. 4.

In the oxidized pulp after the acid treatment, a peak around 1,720 cm⁻¹ derived from a COOH group is observed, whereas a peak around 1,600 cm⁻¹ derived from a COO⁻ observed before the acid treatment disappears. From the above, it was confirmed that the COO⁻ group (Na type) of the oxidized pulp was completely substituted with the COOH group (H type) by the acid treatment.

### (Measurement of carboxy group content of oxidized pulp)

An amount of 0.1 g of the oxidized pulp after TEMPO oxidation was weighed in terms of solid weight, and dispersed in water at a concentration of 1%. Then, hydrochloric acid was added to the dispersion liquid to adjust the pH to 2.5. Thereafter, the carboxy group content (mmol/g) was measured by a conductometric titration method using a 0.5M aqueous sodium hydroxide solution, and found to be 1.6 mmol/g.

### (Introduction of organic onium cation by counter ion substitution)

Water was added to the oxidized pulp to prepare a suspension having a solid concentration of 5%. Then, tetrabutylammonium hydroxide (TBAH) serving as an organic onium compound was added as an alkali type to the suspension in an amount of 1.0 equivalent with respect to the carboxy group of the oxidized pulp. The mixture was stirred for 1 hour using a stirrer to obtain oxidized pulp into which an organic onium cation has been introduced by counter ion substitution.

### (Defibration treatment of counterion-substituted oxidized pulp)

The counterion-substituted oxidized pulp obtained by the above method was dispersed in distilled water, and micronized by a juicer mixer for 30 minutes. Defoaming was performed by a centrifugal defoamer as necessary. Thus, a micronized cellulose (TEMPO-oxidized CNF, CSNF) dispersion liquid having a concentration of 1% was obtained. The obtained dispersion liquid exhibited high transparency and thixotropic properties.

### (Second step: step of preparing O/W type emulsion)

As a core particle precursor, 10 g of monofunctional acrylate, isobornyl acrylate (hereinafter, also referred to as "IB-XA") as a polymerizable monomer was used, and 1 g of 2,2-azobis-2,4-dimethylvaleronitrile (hereinafter, also referred to as "ADVN") as a polymerization initiator was dissolved therein. The entire amount of the IB-XA/ADVN mixed solution was added to 40 g of the micronized cellulose dispersion liquid having a concentration of 1%. The IB-XA/ADVN mixed solution and the dispersion liquid were separated into two phases with high transparency.

Next, the shaft of an ultrasonic homogenizer was inserted from the liquid surface of the upper phase in the mixed liquid in the two-phase separated state, and an ultrasonic homogenizer treatment was performed for 3 minutes under the conditions of a frequency of 24 kHz and an output of 400 W. The mixed liquid after the ultrasonic homogenizer treatment was in a cloudy emulsion state. One drop of the mixed liquid was dropped onto a slide glass, sealed with a cover glass, and observed with an optical microscope. As a result, a large number of emulsion droplets of IB-XA of about 1 to several µm were observed, and it was confirmed that stable dispersion was achieved as an O/W type emulsion.

### (Third step: step of obtaining composite particles coated with micronized cellulose by solidification of core particle precursor)

The O/W type emulsion dispersion liquid was placed in hot water at 70°C in a water bath, and treated for 8 hours while stirring with a stirring bar to perform a polymerization reaction. After the treatment for 8 hours, the dispersion liquid was cooled to room temperature to solidify the droplets, thus producing composite particles in the dispersion liquid. There was no change in the appearance of the dispersion liquid before and after the polymerization reaction.

The obtained dispersion liquid was centrifuged (75,000 g, 5 minutes) to obtain a precipitate containing composite particles. The supernatant was removed by decantation to recover the precipitate, and the precipitate was further repeatedly washed with pure water and methanol using a PTFE membrane filter having a pore size of 0.1 µm. The composite particles thus purified and recovered were redispersed in pure water at a concentration of 1%. The particle size thereof was measured with a particle size distribution meter (NANOTRAC UPA-EX150, manufactured by Nikkiso Co., Ltd.), and the average particle size thereof (median value) was 2.5 µm.When the composite particles were air-dried and subjected to a vacuum drying treatment at a room temperature of 25°C for 24 hours, a fine dry powder was obtained, and aggregation or film formation did not occur.

### (Observation of shape of composite particles by SEM)

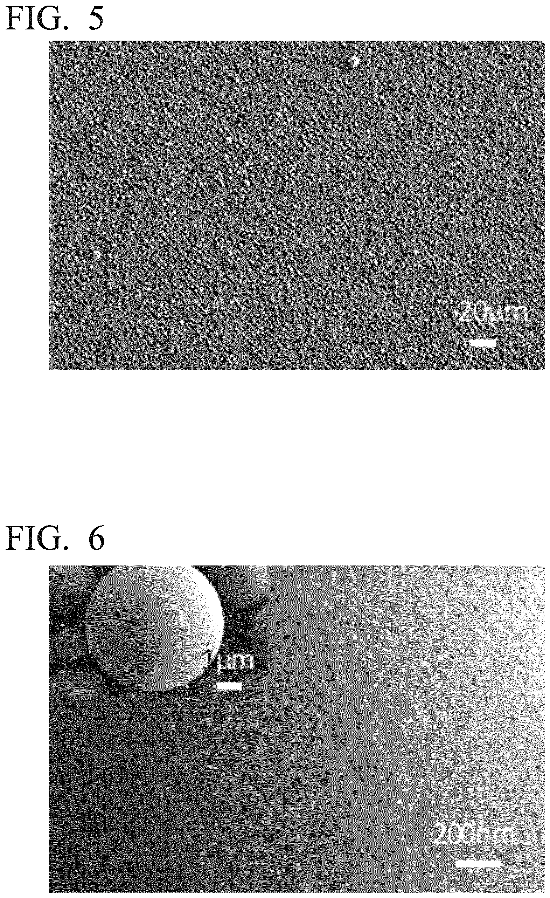

The SEM images of the dry powder are shown in Figs. 5 and 6. The magnification in Fig. 5 is 100 times, the magnification in Fig. 6 is 2,000 times in the upper left region, and 50,000 times in the other region. It can be seen from Fig. 5 that a large number of spherical composite particles 5 derived from the shape of the emulsion droplet were obtained by performing a polymerization reaction using the O/W type emulsion droplet as a template in the second step and the third step, and the uniformity of the particle size is also high.

It can be seen from Fig. 6 that the surface of the composite particle is uniformly covered with the micronized cellulose 1 having a width of about several nm. Fig. 6 is an image after repeated filtration washing, and shows that, in the composite particles 5 of the present invention, the core particle 3 and the micronized cellulose 1 are bonded to each other and are in an inseparable state.

### (Particle size distribution of composite particles)

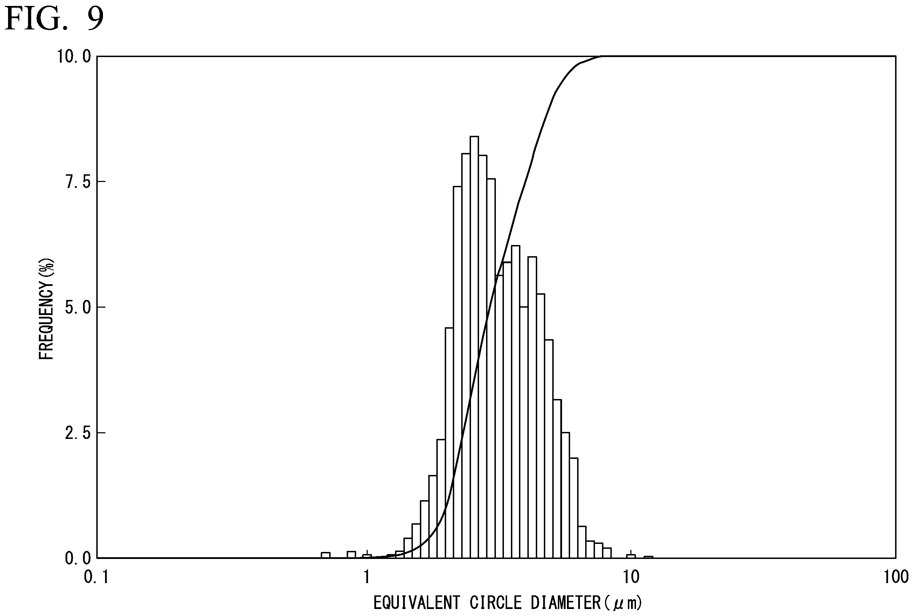

Fig. 9 shows the result of measuring the particle size distribution of the dry powder with a particle size distribution meter LS-13320 manufactured by Beckman Coulter, Inc. In the particle size distribution, most of the values of the equivalent circle diameter fall within a range of 1 to 10 µm with 2.5 µm as a medium value, and this result was in good agreement with the SEM image.

### <Examples 2 to 4>

The composite particles of Examples 2 to 4 were prepared by the same procedure as in Example 1 except that the following organic onium compounds were used in place of TBAH.
Example 2 Tetramethylammonium hydroxide (TMAH)
Example 3 Dimethylbenzylamine (DMBA)
Example 4 Dimethylstearylamine (DMSA)

### <Example 5>

The composite particles of Example 5 were prepared by the same procedure as in Example 1 except that isobonyl methacrylate (IB-X), which is monofunctional methacrylate, was used as a core particle precursor in place of IB-XA.

### <Example 6>

The composite particles of Example 6 were prepared by the same procedure as in Example 1 except that p-methylstyrene (p-MeSt), which is a monofunctional vinyl monomer, was used as a core particle precursor in place of IB-XA.

### <Example 7>

The composite particles of Example 7 were prepared under the same conditions as in Example 1 except that a carboxymethylated CNF obtained by performing the carboxymethylation treatment described in Patent Literature 2 was used in place of the TEMPO-oxidized CNF. The carboxymethylated CNF exhibits high transparency.

### <Example 8>

Polycaprolactone (PCL, molecular weight 10,000) was used as a core particle precursor. In the second step, a 20% MEK solution of PCL was added to the micronized cellulose dispersion liquid. This dispersion liquid was heated to 75°C and subjected to an ultrasonic homogenizer treatment to form an O/W type emulsion, and then the emulsion was cooled with ice water to solidify droplets.

The composite particles of Example 7 were prepared under the same conditions as in Example 1 except for the above.

### <Example 9>

The composite particles of Example 9 were prepared by the same procedure as in Example 8 except that DMBA was used in place of TBAH.

### <Example 10>

The composite particles of Example 10 were prepared by the same procedure as in Example 1 except that the addition amount of TBAH was changed to 0.8 equivalents with respect to the carboxy group of the oxidized pulp.

### <Example 11>

The composite particles of Example 11 were prepared by the same procedure as in Example 1 except that the addition amount of TBAH was changed to 1.8 equivalents with respect to the carboxy group of the oxidized pulp.

### <Example 12>

The composite particles of Example 12 were prepared by the same procedure as in Example 1 except that the acid treatment was performed only once in the first step.

In Example 12, the degree of substitution with the COOH group in the oxidized pulp determined by the FT-IR measurement was 0.7. The degree of substitution is defined as a ratio when the peak intensity ratio (I1720/I2870) of the peak intensity at 1,720 cm⁻¹ to the peak intensity at 2,870 cm⁻¹ is determined using the peak intensity at 2,870 cm⁻¹ derived from a CH stretching group as a reference, and the peak intensity ratio of I1720/I2870 in Fig. 5 is defined as 1.

### <Examples 13 and 14>

The composite particles of Examples 13 to 14 were prepared by the same procedure as in Example 1 except that the following amines were used in place of the organic onium compound TBAH.

### Example 13 Stearylamine

### Example 14 Trihexylamine

### <Comparative Example 1>

The composite particles of Comparative Example 1 were prepared by the same procedure as in Example 1 except that untreated pulp not subjected to a TEMPO oxidation treatment was used.

### <Comparative Example 2>

The composite particles of Comparative Example 2 were prepared by the same procedure as in Example 1 except that sodium hydroxide which is not an organic onium compound was used in place of TBAH.

### <Comparative Example 3>

The composite particles of Comparative Example 3 were prepared by the same procedure as in Example 5 except that sodium hydroxide which is not an organic onium compound was used in place of TBAH.

### <Comparative Example 4>

The composite particles of Comparative Example 4 were prepared by the same procedure as in Example 6 except that sodium hydroxide which is not an organic onium compound was used in place of TBAH.

### <Comparative Example 5>

The composite particles of Comparative Example 5 were prepared by the same procedure as in Example 7 except that sodium hydroxide which is not an organic onium compound was used in place of TBAH.

### <Comparative Example 6>

The composite particles of Comparative Example 6 were prepared by the same procedure as in Example 8 except that sodium hydroxide which is not an organic onium compound was used in place of TBAH.

### (Fourth step: step of removing organic onium cation from composite particles 5)

The dry powder of the composite particles 5 according to Example 1 was added to an aqueous hydrogen chloride solution having a pH of 2.5 so as to have a solid concentration of 1%, treated with an ultrasonic cleaner for 5 minutes, and further stirred with a stirrer for 30 minutes. As a result, a suspension having no aggregation visually observed was obtained. The suspension was concentrated by centrifugation (25,000 g, 10 minutes) and decantation, and then, an aqueous hydrogen chloride solution at pH 4 was added thereto. The mixture was stirred with a stirrer for 5 min, followed by further concentration by centrifugation and decantation. Thereafter, washing and concentration with pure water were repeated five times. The purified and recovered composite particles were air-dried, and further subjected to a vacuum drying treatment at a room temperature of 25°C for 24 hours to obtain a dry powder. As a result of XPS analysis of the obtained dry powder, it was confirmed that a nitrogen source derived from TBAH was not detected, and the organic onium cation was removed. The dry powder was again added to pure water and subjected to an ultrasonic treatment, and as a result, the dry powder exhibited good redispersion.

The above treatments were performed in all Examples, and removal of the organic onium cation and good redispersion were confirmed. In Comparative Examples, the fourth step was not performed.

The contents of Examples and Comparative Examples are collectively shown in Table 1.

**(Table 1)**

| | MICRONIZED CELLULOSE | DEGREE OF COOH SUBSTITUTION | ALKALI TYPE ADDITION | AMOUNT OF ALKALI TYPE(BASED ON CARBOXY GROUP) | CORE PARTICLE PRECURSOR |
|---|---|---|---|---|---|
| EXAMPLE 1 | TEMPO-OXIDIZED | 1 | TBAH | 1.0 EQUIVALENTS | IB-XA |
| EXAMPLE 2 | TEMPO-OXIDIZED | 1 | TMAH | 1.0 EQUIVALENTS | IB-XA |
| EXAMPLE 3 | TEMPO-OXIDIZED | 1 | DMBA | 1.0 EQUIVALENTS | IB-XA |
| EXAMPLE 4 | TEMPO-OXIDIZED | 1 | DMSA | 1.0 EQUIVALENTS | IB-XA |
| EXAMPLE 5 | TEMPO-OXIDIZED | 1 | TBAH | 1.0 EQUIVALENTS | IB-X |
| EXAMPLE 6 | TEMPO-OXIDIZED | 1 | TBAH | 1.0 EQUIVALENTS | p-MeSt |
| EXAMPLE 7 | CARBOXYMETHYLATED | 1 | TBAH | EQUIVALENTS | IB-XA |
| EXAMPLE 8 | TEMPO-OXIDIZED | 1 | TBAH | 1.0 EQUIVALENTS | PCL |
| EXAMPLE 9 | TEMPO-OXIDIZED | 1 | DMBA | 1.0 EQUIVALENTS | PCL |
| EXAMPLE 10 | TEMPO-OXIDIZED | 1 | TBAH | EQUIVALENTS | IB-XA |
| EXAMPLE 11 | TEMPO-OXIDIZED | 1 | TBAH | 1.8 EQUIVALENTS | IB-XA |
| EXAMPLE 12 | TEMPO-OXIDIZED | 0.7 | TBAH | 1.0 EQUIVALENTS | IB-XA |
| EXAMPLE 13 | TEMPO-OXIDIZED | 1 | STEARYLAMINE | EQUIVALENTS | IB-XA |
| EXAMPLE 14 | TEMPO-OXIDIZED | 1 | TRIHEXYLAMINE | EQUIVALENTS | IB-XA |
| COMPARATIVE EXAMPLE 1 | UNOXIDIZED PULP | - | TBAH | 1.0 EQUIVALENTS | IB-XA |
| COMPARATIVE EXAMPLE 2 | TEMPO-OXIDIZED | 1 | Na | 1.0 EQUIVALENTS | IB-XA |
| COMPARATIVE EXAMPLE 3 | TEMPO-OXIDIZED | 1 | Na | 1.0 EQUIVALENTS | IB-X |
| COMPARATIVE EXAMPLE 4 | TEMPO-OXIDIZED | 1 | Na | 1.0 EQUIVALENTS | p-MeSt |
| COMPARATIVE EXAMPLE 5 | CARBOXYMETHYLATED | 1 | Na | 1.0 EQUIVALENTS | IB-XA |
| COMPARATIVE EXAMPLE 6 | TEMPO-OXIDIZED | 1 | Na | 1.0 EQUIVALENTS | PCL |

The evaluation results of Examples and Comparative Examples are shown in Table 2. The evaluation items and criteria are as follows.
- Yield of composite particles (%)
   The yield was calculated as a value of the weight (g) of the obtained composite particles/the resin weight (g) of the core particle precursor used for production × 100.
- Average particle size (median value) of composite particles: determined using a laser diffraction particle size distribution meter (LS-13320 manufactured by Beckman Coulter, Inc.). When the masses of coarsened resin were present, the masses were removed and measured.
- Execution feasibility of each process

### (First step)

∘ (Executable): The transmittance (optical path length: 1 cm, wavelength: 600 nm) of the dispersion liquid measured with a spectrophotometer is 70% or more.
× (Not executable): The transmittance (optical path length: 1 cm, wavelength: 600 nm) of the dispersion liquid measured with a spectrophotometer is less than 70%.

A low transmittance of the dispersion liquid indicates that the cellulose is not micronized.

### (Second step)

∘ (Executable): No change is observed in the total light transmittance of the O/W type emulsion after standing for 24 hours.
× (Not executable): The total light transmittance of the O/W type emulsion greatly changes after standing for 24 hours. Alternatively, separation is observed.

The change in the total light transmittance of the emulsion is caused by destabilization such as separation or coalescence of the emulsion.

### (Third step)

∘ (Executable): A large number of spherical composite particles are obtained.
× (Not executable): Particles are not spherical or coarse masses of aggregated composite particles are observed.

When the emulsion is highly stable, the shape of droplets of the emulsion is maintained even after polymerization. On the other hand, when the emulsion becomes unstable before or during polymerization, deformed resin or coarsened resin is generated due to separation or coalescence.

**(Table 2)**

| | EXECUTION OF FIRST STEP | EXECUTION OF SECOND STEP | EXECUTION OF THIRD STEP | YIELD (%) | MEDIAN SIZE (*µ*m) |
|---|---|---|---|---|---|
| EXAMPLE 1 | ○ | ○ | ○ | 73 | 2. 5 |
| EXAMPLE 2 | ○ | ○ | ○ | 70 | 3.0 |
| EXAMPLE 3 | ○ | ○ | ○ | 78 | 2. 8 |
| EXAMPLE 4 | ○ | ○ | ○ | 81 | 2. 4 |
| EXAMPLE 5 | ○ | ○ | ○ | 86 | 2. 1 |
| EXAMPLE 6 | ○ | ○ | ○ | 76 | 2. 9 |
| EXAMPLE 7 | ○ | ○ | ○ | 72 | 3. 4 |
| EXAMPLE 8 | ○ | ○ | ○ | 93 | 6. 3 |
| EXAMPLE 9 | ○ | ○ | ○ | 90 | 5. 8 |
| EXAMPLE 10 | ○ | ○ | ○ | 75 | 3. 1 |
| EXAMPLE 11 | ○ | ○ | ○ | 70 | 3. 3 |
| EXAMPLE 12 | ○ | ○ | ○ | 69 | 2. 9 |
| EXAMPLE 13 | ○ | ○ | ○ | 86 | 4. 2 |
| EXAMPLE 14 | ○ | ○ | ○ | 82 | 5. 9 |
| COMPARATIVE EXAMPLE 1 | × | × | × | ○ | - |
| COMPARATIVE EXAMPLE 2 | ○ | ○ | × | 24 | 25 |
| COMPARATIVE EXAMPLE 3 | ○ | × | × | 32 | 21 |
| COMPARATIVE EXAMPLE 4 | ○ | × | × | 20 | 29 |
| COMPARATIVE EXAMPLE 5 | ○ | × | × | 17 | 44 |
| COMPARATIVE EXAMPLE 6 | ○ | × | × | 40 | 51 |

As shown in Table 2, in each of Examples, the core particle precursor was stabilized and formed into droplets in the micronized cellulose dispersion liquid, and composite particles having a small and uniform particle size were formed with a favorable high yield. This is considered to be because a part of the hydrophilic CNF was hydrophobized by the organic onium cation derived from the organic onium compound, whereby the adsorption force of the CNF to the core particle precursor was improved.

In any of Comparative Examples, all of the first step to the third step could not be performed satisfactorily. As a result, the yield of the composite particles was low, and the uniformity of the particle size was also low.

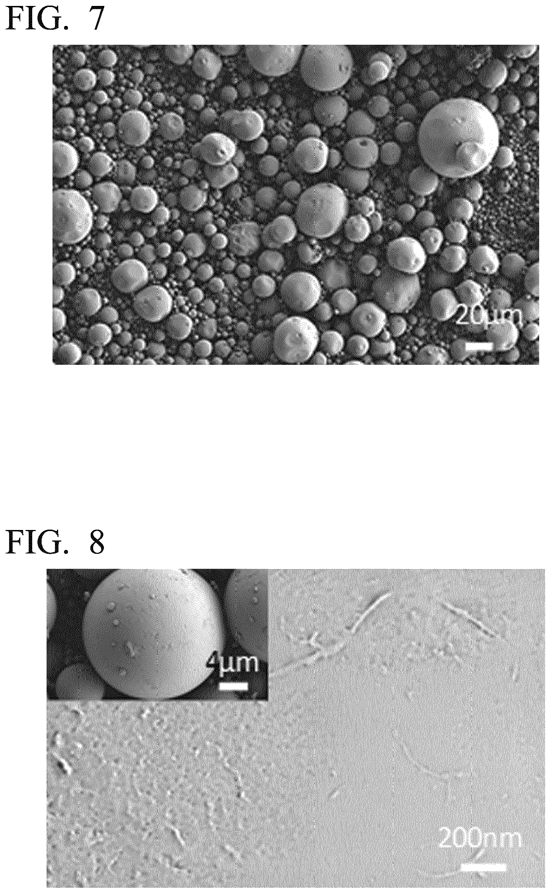

Figs. 7 and 8 show photographs of dry powders of the composite particles according to Comparative Example 1 observed by an SEM. In Comparative Example 1, it can be seen from Fig. 7 that coarsened composite particles exist and the particle size distribution is not uniform. In the coarsened composite particles, as shown in Fig. 8, many of the surfaces of the core particles were exposed, and only a small amount of micronized cellulose was bonded to the core particle.

### INDUSTRIAL APPLICABILITY

The composite particles according to the present invention have favorable effects from the viewpoint of industrial implementation, such as improvement in addition efficiency as an additive and kneading efficiency with a resin, as well as contribution to cost reduction from the viewpoint of improvement in transportation efficiency and prevention of spoilage. The composite particles can be applied to, for example, coloring materials, adsorbents, cosmetic pigments, sustained-releasing materials, deodorants, antibacterial medical components, antibacterial articles for personal care products, packaging materials, dye-sensitized solar cells, photoelectric conversion materials, photothermal conversion materials, heat shielding materials, optical filters, Raman enhancing elements, image display elements, magnetic powders, catalyst supports, drug delivery systems, by utilizing the characteristics of the micronized cellulose on the particle surface and the polymer constituting the core particle.

### DESCRIPTION OF THE REFERENCE SYMBOLS

1 Micronized cellulose
2 Core particle precursor (droplet)
3 Core particle
5 Composite particle
6 Cellulose raw material
7 Organic onium compound/amine
7a Organic onium cation/ammonium ion
10 Micronized cellulose layer

## Claims

1. A composite particle comprising:
a core particle containing at least one type of polymer; and
micronized cellulose that has an anionic functional group, is inseparably bonded to the core particle, and is disposed on a surface of the core particle, wherein
an organic onium cation or an amine is bonded to at least a part of the micronized cellulose.

2. The composite particle according to claim 1, wherein the organic onium cation contains at least one type of atom selected from nitrogen, phosphorus, hydrogen, and sulfur.

3. The composite particle according to claim 1, wherein the organic onium cation is a quaternary ammonium ion.

4. The composite particle according to claim 1, wherein the amine is any of a primary amine, a secondary amine, and a tertiary amine.

5. The composite particle according to claim 1, wherein the polymer is obtained by polymerizing at least one or more types of monomers having a polymerizable functional group.

6. The composite particle according to claim 1, wherein the polymer is a thermoplastic polymer.

7. The composite particle according to claim 1, wherein the core particle contains a biodegradable material.

8. A method for producing a composite particle, comprising:
a first step of defibrating an anionic cellulose raw material in a solvent containing an organic onium compound/amine to obtain a micronized cellulose dispersion liquid containing micronized cellulose to which an organic onium cation/ammonium ion is bonded;
a second step of stabilizing a core particle precursor in a liquid state, as an emulsion, in the micronized cellulose dispersion liquid; and
a third step of solidifying the core particle precursor to form a core particle, thus obtaining a composite particle in which the core particle is coated with the micronized cellulose inseparably bonded to the core particle.

9. The method for producing a composite particle according to claim 7, further comprising a fourth step of removing the organic onium cation/ammonium ion bonded to the micronized cellulose after the third step.
